(19) Europäisches Patentamt
European Patent Office
Office européen des brevets

(11) Publication number: **0 041 819**
**A2**

(12) # EUROPEAN PATENT APPLICATION

(21) Application number: 81302447.8

(22) Date of filing: 02.06.81

(51) Int. Cl.$^3$: C 01 B 21/46

(30) Priority: 05.06.80 GB 8018417

(43) Date of publication of application: 16.12.81 Bulletin 81/50

(84) Designated Contracting States: AT BE DE FR GB NL

(71) Applicant: Bolme, Donald Weston
Suite 406, Seattle Trust Building 10655 North 14th Street
Bellevue Washington 98004(US)

(72) Inventor: Bolme, Donald Weston
Suite 406, Seattle Trust Building 10655 North 14th Street
Bellevue Washington 98004(US)

(74) Representative: Baverstock, Michael George Douglas
BOULT, WADE & TENNANT 27 Furnival Street
London, EC4A 1PQ(GB)

(54) **Removal of nitrous material from nitric acid streams.**

(57) A method of removing nitrous material from a nitrate ion-containing solution, such as nitric acid, by oxidising it at the anode of an electrolytic cell. High conversions per pass are achieved by use of a special anode and cell configuration. Methods of using this process as a part of a nitrogen oxide recovery process are presented, along with methods of integrating the recovery process with a nitric acid production process. A special catholyte is disclosed which reduces the cell potential necessary to operate the process.

EP 0 041 819 A2

"REMOVAL OF NITROUS MATERIAL FROM NITRIC ACID STREAMS"

The present invention is a process for removing nitrous material from aqueous, nitrate ion-containing solutions, particularly aqueous nitric acid, and a method by which this process may advantageously be incorporated into a nitric acid production plant. The process may be used as an improvement on an existing method for removing nitrogen oxides from industrial gas streams or as a method of removing nitrous materials from nitric acid or as a method of increasing the concentration of product nitric acid.

A number of patents, including United States Patent Nos. 4,053,555, 4,118,460 and 4,138,470, have been granted to Dr. Donald W. Bolme of Bellevue, Washington, U.S.A., for a process that removes nitrogen oxides from industrial gas streams by the use of an oxidizing solution which converts the nitrogen oxides into a soluble compound, specifically nitrous acid, and stabilizes this compound in solution. Published British Patent Application No. 1587456 describes this process and claims the use of nitrate solutions in which nitrates are the oxidants.

BAD ORIGINAL

As described in the above patents, the industrial gas which contains the nitrogen oxides is scrubbed with a nitrate ion-containing solution, such as 25 wt % nitric acid. When this is done, some of the nitrogen oxides react with the nitric acid and water and are converted into nitrous acid, which is stabilised and retained in the solution, and the oxides are thereby removed from the gas.

As further described in the above patents, the nitrous acid is subsequently removed from the solution by physical means such as by steam stripping, air stripping, vacuum stripping, etc.

The stripping methods so disclosed have been found to be unacceptably expensive in practice because they all require some combination of increased temperature and decreased pressure. Increased temperature is expensive because of the cost of the steam required, the cost of the heat recovery systems necessary to minimise the amount of steam consumed and the corrosion encountered at higher temperatures. Decreased pressure is also expensive because of the high cost and poor efficiency of the compressors required to compress the recovered nitrogen oxide gases to the pressure necessary to recycle them.

An improvement on this process has been developed in which the pregnant scrubbing solution is regenerated by oxidising the contained nitrous acid with commercial grade oxygen under a pressure of, typically, 10 atmospheres

BAD ORIGINAL

or with other oxygen-containing gases at higher pressures, such as air at 50 atmospheres (see published British Patent Application No. 2056420).

This improvement is superior to the previously used methods such as steam stripping, air stripping, vacuum stripping, etc. It is still expensive, however, in that commercial oxygen is expensive to buy or produce and requires a special compressor. Use of air is cheaper but still expensive in that the amount of gas to be compressed is 5 times as great and the gas must be compressed to a higher pressure (50 atm. instead of 10 atm.). Also, the oxidation reactor required is expensive because it must be large in volume and contain corrosive materials at high pressure.

Finally it is difficult, when using that improved process, to reduce the nitrous acid concentration low enough that the scrubbing solution can be recycled directly (i.e. without further treatment such as by the addition of some amount of hydrogen peroxide). The source of this problem is the chemistry of the system itself. The rate of oxidation (regeneration) is proportional to the square of the nitric oxide (gas) partial pressure and this, in turn, is proportional to the 1.5 power of the nitrous acid concentration in the solution. This means that the rate of oxidation varies as the 3rd power of the nitrous acid

BAD ORIGINAL

concentration. Therefore the rate of oxidation (regeneration) is reduced by a factor of eight when the nitrous acid concentration is reduced by a factor of two.

The invention disclosed in this patent application is a method by which nitrate ion containing solutions, such as nitric acid streams, may be purged of contained nitrous material by oxidising them in the anode compartment of an electrolytic cell. When it is used to treat the pregnant solution produced by the Bolme $NO_x$ Recovery Process, generally as described in the patents and patent applications cited above, it renders the scrubbing solution suitable for use by recycle. When it is used to treat the product acid produced by a nitric acid process, it converts the dissolved nitrous material to nitric acid, thereby both eliminating the dissolved nitrous material and increasing product acid concentration.

This invention, and the process by which it operates, are best understood with reference to two embodiments thereof illustrated in the accompanying drawings, in which:-

Figure 1 is a schematic flow diagram showing the operation of an electrolytic cell used in the method of the present invention, in which water is fed to the cathode compartment of the cell in replacement of the

BAD ORIGINAL

hydrogen evolved and the oxidation consumed in the oxidation.

Figure 2 is a schematic flow diagram showing the operation of an electrolytic cell used in the method of the present invention, in which nitric acid is fed to the cathode compartment and is recycled; and

Figure 3 is a schematic flow diagram of an integrated process for removing nitrogen oxides from an industrial gas stream using the method of the present invention.

Figure 4 is a schematic flow diagram of an integrated process which uses the method of the present invention to remove nitrous materials from the product acid, produced by a nitric acid plant, and simultaneously increase the product acid concentration.

Figure 5 is a schematic flow diagram of an integrated process which combines the method of the present invention with recirculation to increase the concentration of the product acid produced by a nitric acid plant and purge the product of nitrous materials.

Figure 1 illustrates the basis process. The pregnant scrubbing solution 1 produced by scrubbing industrial gas streams to remove the nitrogen oxides from them, generally as described in the patents and patent applications cited above, enters the anode compartment 2 of the electrolytic

BAD ORIGINAL

cell 22. Here it is caused to come into intimate contact with the anode 3, whereupon the nitrous acid contained in the solution is oxidized to form (additional) nitric acid according to the overall anode reaction:-

$$HNO_2 + H_2O \longrightarrow HNO_3 + 2H^+ + 2e^-$$

It is important to note that the statement of an overall reaction does not infer a particular mechanism. In fact, the industrial chemistry of oxidized nitrogen is known to have overall reactions in which several mechanisms operate in parallel.

When nitrous materials are dissolved in aqueous nitric acid two species are known to co-exist, $HNO_2$ and $N_2O_4$. Their relative proportions are determined by the equilibrium

$$H_2O + N_2O_4 \rightleftharpoons HNO_3 + HNO_2$$

The preponderant species of nitrous material depends upon the acid concentration. $HNO_2$ predominates between 15 and 40 wt% nitric acid; $N_2O_4$ predominates above 55 wt.%. Trace amounts of $N_2O_3$ are also possible, particularly at very high acid concentrations.

The actual anodic oxidation probably takes place, at least primarily, by the mechanism:

BAD ORIGINAL

$$2\ (HNO_2 \longrightarrow NO_2 + H^+ + e^-)$$

$$2NO_2 \rightleftharpoons N_2O_4$$

$$N_2O_4 + H_2O \rightleftharpoons HNO_3 + HNO_2$$

This is important to the oxidation of nitrous materials present in concentrated nitric acid solution, because it means that $NO_2$ and $N_2O_4$ (and $N_2O_3$ if present) can (also) be effectively oxidized by the process disclosed in this patent.

Oxygen may form at the anode if the voltage used to operate the cell is high. Any oxygen so formed that does not dissolve in the solution is vented 5.

A porous anode 3 is provided so that the pregnant solution 1 can be passed through it and thus assure the intimate contact between all parts of the solution and the anode that is necessary to substantially complete oxidation of the contained nitrous material ($HNO_2$, $NO_2$ $N_2O_4$, and $N_2O_3$ if present). A suitable anode can be formed from multiple layers of 304 L stainless steel screen. Alternatively, the anode may be made from knitted or crimped wire mesh such as is frequently used in the chemical industry as "demister pads."

In an industrial scrubbing process, 240,000 liters/hr. of pregnant solution 1 is fed to such an electrolytic cell

BAD ORIGINAL

at from 20 to 40°C. The pregnant solution consists of a 23.5% solution of nitric acid which contains 0.036 gram moles/liter of dissolved nitrous acid. After electrolysis, the nitrous acid concentration of the oxidized solution 4 leaving the anode is reduced to less than 0.004 gram moles/liter.

The anode compartment 2 is separated from the cathode compartment 6 of the cell by a cation-permeable membrane 7, such as that sold under the trade mark NAFION by du Pont. The cathode compartment contains the cathode 8 and an electrolyte 9, such as sulphuric acid or a suitable alkali, in order to render the water electrically conductive. The cathode reaction consists of the reduction of hydrogen ions;

$$2\ e^{-} + 2H^{+} \longrightarrow H_2$$

The hydrogen 10 produced in the cathode compartment can be used in another process, such as an ammonia production process or as a fuel gas, or it may be destroyed by burning. Makeup water 11 is supplied to the cathode compartment 6 in order to replace the hydrogen being evolved.

The amount of oxygen produced in the anode compartment is generally very small in this system and will normally remain dissolved in the oxidized solution 4. If, however, the amount of oxygen produced exceeds the capacity of the

BAD ORIGINAL

solution to dissolve it, the excess may be vented as shown.

The electrical voltage required to operate this cell is that necessary to drive the combined (anode plus cathode) reaction:

$$HNO_2 + H_2O \longrightarrow HNO_3 + H_2 \qquad E^0 = 0.94 \text{ volts}$$

plus that required to overcome the various resistances imposed by the cell itself. The total voltage across the cell will vary with cell design but will be of the order of 2.0 volts.

Variations of this basis process are possible, of course. As one example, the anolyte can be recirculated with the pregnant solution added to the stream entering the anode chamber and the oxidized solution withdrawn from the solution leaving the anode chamber. Variations in the geometry, arrangement, and material of construction of the anode, cathode, barriers, electrolytic cell and its component parts are also possible.

Figure 2 shows an improved process designed to reduce the voltage required to operate the cell and to integrate the improved process with a nitric acid process. Figures 3, 4, and 5 show methods by which this integration may be carried out.

Referring to Figure 2, the physical arrangement of the anode compartment 2 of the cell 22 is changed so that the pregnant scrubbing solution (anolyte) passes length-

BAD ORIGINAL

wise through the porous anode 3. This forces the anolyte to come into more thorough, intimate, and repeated contact with the anode. This, in turn, increases the fraction of the nitrous acid which can be oxidized in one pass through the cell.

The reactions which occur within the anode compartment are as described with reference to Figure 1.

The cathode compartment 6, and specifically the catholyte and the cathode reaction, are changed in that the catholyte is a (second) stream of nitric acid 12 and the cathode reaction is the reverse of the anode reaction. In addition, the cathode 8 is now arranged to be porous and to fill the cathode compartment 6. The overall cathode reactionis now the reduction of (a small part of the total available) nitric acid in stream 12 to produce nitrous acid, i.e.:-

$$2H^+ + 2e^- + HNO_3 \longrightarrow 2HNO_2 + H_2O$$

instead of the reduction of water to liberate hydrogen. The nitrous material produced at the cathode will dissolve in stream 12 and be recycled with the nitric acid stream 13.

One important advantage provided by this improved process is that the cathode reaction produces a voltage equal and opposite to that produced by the anode reaction. Therefore, the voltage required to drive

BAD ORIGINAL

the overall reaction is reduced to approximately zero and the total voltage across the cell, and the power required to operate it are reduced by approximately half.

Other advantages provided by this improved process are discussed under Figures 3, 4, and 5.

Figure 3 illustrates an integrated flow diagram of (part of) a "typical" nitric acid process using the Bolme $NO_x$ Recovery Process and using the electrolytic method of this invention to regenerate the Bolme scrubbing solution. The typical nitric acid process is drawn in light lines and the Bolme $NO_x$ Recovery Process, generally as described above, and the method of this invention are shown in heavier lines.

Hot feed gas 14 from an ammonia oxidation process (not shown) and consisting of a mixture of NO, $NO_2$, $H_2O$, $O_2$, and $N_2$. is fed through a cooler-condenser 15 to an absorber 16. The cooler-condenser 15 condenses a majority of the water in stream 14. Also, as a result of reactions which cannot be avoided, some of the $NO_2$ present in the hot feed gas 14 reacts with this water to produce nitric acid which also condenses. The combined condensate is removed as condensate acid 17 which is fed to the absorber 16 at about the mid-point.

The feed gas then rises through the absorber 16 countercurrent to the condensate acid 17 and feed water 27, to produce the absorber offgas 20 which is led off for further treatment.

Feed water 27 is fed to the top of the absorber 16 and descends countercurrent to the feed gas, reacting with the nitrogen oxides and oxygen contained in the gas to produce

BAD ORIGINAL

nitric acid which leaves as product acid 18. Some amount of secondary air 19 is fed to the bottom of the absorber, below the point at which the feed gas enters, to remove some of the nitrous material present in the acid and, joining the feed gas, to supply additional oxygen to the absorber.

It is important to note that the value of the product acid increases with concentration. Further, that the acid concentration which can be produced is limited by the concentration of the $NO_X$ which enters the absorber 16 with the feed gas. Finally, that the $NO_X$ which enters the absorber 16 with the feed gas is limited to that which escapes conversion to condensate acid 17 in the cooler-condenser 15.

When the Bolme $NO_X$ Recovery Process

ORIGINAL

described above is added to the nitric acid plant, the offgas 20 is fed to a scrubbing tower 21 which is fed with an aqueous nitrate ion-containing scrubbing solution 4 consisting, in this case, of dilute nitric acid.

When utilising the electrolytic method of the present invention, the pregnant scrubbing solution 1 leaving the bottom of the scrubbing tower 21 enters the anode side of an electrolytic cell 22 where it passes in intimate contact with the anode and substantially all of the contained nitrous acid is oxidised to (additional) nitric acid. The oxidised solution 4, now substantially purged of its nitrous acid content, is then pumped through a cooler 23, to remove heats of reaction, etc., which the solution has acquired in the scrubbing tower and the electrolytic system, and is returned to the top of the scrubbing tower. Wash water 24 is fed to the wash section of the scrubbing tower 21, leaving a clean gas stream 25 and producing acid wash 28 which is fed to the absorber in replacement of the feed water 27.

On the cathode side of the electrolytic cell 22, the process proceeds as follows:-

Secondary condensate 12 is withdrawn from the cooler-condenser 15, at a point where the acid is still fairly hot (at least 15°C. above local cooling water temperature). This acid will contain some amount of

BAD ORIGINAL

dissolved $HNO_2$ but the amount will be limited by $HNO_2$ solubility, which is small at elevated temperatures, and by the nitrogen oxides content of the gas at this point typically less than 10%.

This acid 12 is cooled through cooler 26 and passed into the cathode side of the electrolytic cell 22 where a portion of the nitric acid therein is reduced to nitrous acid and/or other nitrous material such as $N_2O_4$. This nitrous material stays in the solution 13 which is returned to the main process and sprayed into the hot feed gas 14, cooling the gas thereby and being itself heated so as to release the dissolved nitrous acid.

It will be understood that the solubility of nitrous material in the condensate acid is higher in the cathode compartment than in the cooler-condenser because the liquid is cooler and because the $NO_x$ concentration of the gas, potentially available in the cathode compartment, approaches 100%. These facts reduce the condensate acid recirculation rate, which must be sufficiently high that the acid dissolves and retains all of the nitrous material produced in the cathode compartment.

The advantages of this second approach, as shown and exemplified in Figures 2 and 3 are several:

In the electrolytic cell itself as shown in Figure 2:

(a) The open circuit voltage is reduced from 0.94

BAD ORIGINAL

volts in the embodiment shown in Figure 1 to approximately zero. This reduces substantially the power required to operate the cell.

(b) No additional elements, potentially contaminating to the nitric acid process or product, are introduced to the system.

(c) The penalty for leakage between the anolyte and the catholyte is much reduced. In fact the scrubbing solution (anolyte) must be bled continuously to remove the nitric acid formed and a very small leakage of the anolyte into the catholyte, say 0.5%, of the feed to the anode compartment, is no problem at all.

The method of integration, of the electrolytic regeneration method and the main nitric acid process, shown in Figure 3 also has advantages in that:

(d) Recycle of cooled acid to (the inlet of) the cooler-condenser aids in the cooling of the gas. This is valuable, particularly if the plant is being forced for capacity.

(e) Release of nitrous material from the recirculated acid, as it is heated upon return to the cooler-condenser will tend to increase the $NO_x$ concentration of the gas entering the absorber. This will tend to increase the rate

BAD ORIGINAL

in the bottom of the absorber, or the concentration of the acid produced, or both.

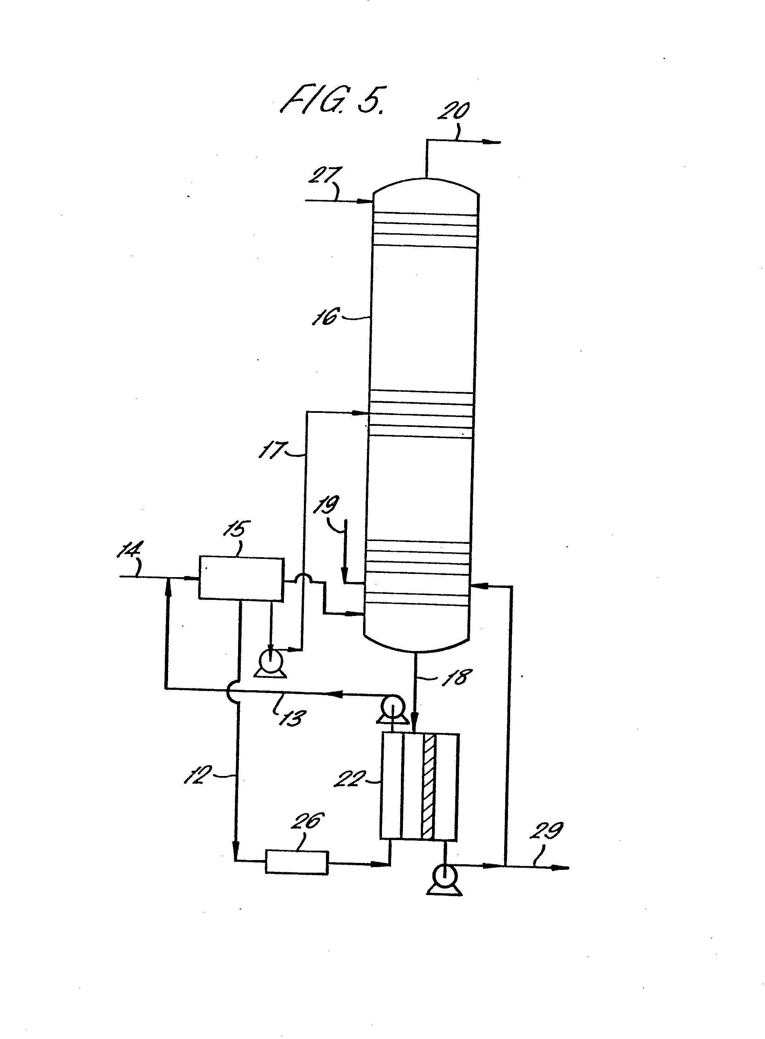

Figure 4 illustrates an integrated flow diagram of (part of) a "typical" nitric acid process using the electrolytic method of this invention to remove nitrous material from the product acid.

Referring to Figure 4, all streams and equipment shown are the same as described in Figure 3 except that the acid stream fed to the anode compartment is the product acid 18 and the oxidizing solution produced from the anode compartment is bleached product acid 29.

Product nitric acid, produced by an absorber such as that shown, will normally contain some amount of nitrous material ($HNO_2$, $NO_2$ and $N_2O_4$ in equilibrium). These materials can be oxidized to nitric acid, increasing the product acid concentration thereby, by an electrolytic cell substantially identical to that shown in Figures 1 and 2.

If desired, the amount of nitrous material contained in the product acid, and the concentration gain provided by oxidizing it, can be increased by adding the secondary air to the absorber at the same point as the feed gas enters the absorber.

Figure 5 illustrates an integrated flow diagram of (part of) a "typical" nitric acid process in which the electrolytic method of this invention is used with recirculation to increase the concentration of the product acid.

BAD ORIGINAL

Referring to Figure 5, all streams and equipment shown are the same as described in Figure 3 with the following exceptions.

- The points at which the feed gas 14 and the secondary air 19 enter the absorber 16 are reversed.
- The acid stream fed to the anode compartment is the product acid 18.
- A portion of the bleached product acid 28 produced from the anode compartment is removed as the final product and the balance is recirculated to a point above the entry of the feed gas.

Product nitric acid which has not been contacted by secondary air after contacting the feed gas will typically contain 0.8% nitrous material ($HNO_2$, $NO_2$ and $N_2O_4$ equilibrium). These materials will react at the anode to produce nitric acid by the overall reactions:

$$HNO_2 + H_2O \longrightarrow HNO_3 + 2H^+ + 2e^-$$

$$NO_2 + H_2O \longrightarrow HNO_3 + H^+ + e^-$$

$$N_2O_4 + 2H_2O \longrightarrow 2HNO_3 + 2H^+ + 2e^-$$

Therefore, this procedure will increase product concentration by four mechanisms:

. production of additional nitric acid by oxidation of dissolved nitrous materials according to the overall reactions above,

. consumption of water according to the same reactions above,

BAD ORIGINAL

- release of additional nitrous materials, produced in the cathode compartment, into the feed gas upon recycle of stream 13 (as described under Figure 3 above) which increases the amount of dissolved nitrous materials in the product acid 18, and
- recirculation of a portion of the product acid to compound the effects of the above three steps.

As will be understood by those familiar with the art, the Product Enrichment System shown in Figure 5 (or that shown in Figure 4) and the $NO_x$ Recovery System shown in Figure 3 may be installed in the same nitric acid plant.

BAD ORIGINAL

Claims:-

1. A method of continuously removing nitrous material from an aqueous nitrate ion-containing stream which comprises oxidising the said stream at the anode of an electrolytic cell.

2. A method as claimed in claim 1 wherein the said nitrous material is produced by using the said aqueous nitrate ion-containing stream to scrub an industrial gas stream and thereby reduce the nitrogen oxides content of the said industrial gas stream.

3. A method as claimed in claim 1 or claim 2 wherein the anode is porous and the stream to be oxidised is passed through the anode.

4. A method as claimed in any one of the preceding claims wherein the catholyte is aqueous nitric acid.

5. A method as claimed in claim 4 wherein the catholyte is condensate acid obtained from the cooler-condenser of a nitric acid plant.

BAD ORIGINAL

6. A method as claimed in claim 4 or claim 5 wherein the catholyte is, after passing through the cell, fed or returned to a nitric acid plant.

7. A method as claimed in any one of the preceding claims wherein the stream produced by the anodic oxidation step is returned to the process in which the nitrate ion-containing stream acquired the said nitrous material.

8. A method as claimd in any one of the preceding claims wherein the aqueous nitrate ion-containing stream is used to reduce the nitrogen oxides content of the tail gas stream of a nitric acid plant.

9. A method as claimed in any one of the preceding claims wherein the aqueous nitrate ion-containing stream consists of aqueous nitric acid and wherein the nitric acid stream produced in the anodic oxidation step is returned to the process in which the nitrate ion-containing stream absorbed the said nitrous material.

10. A method as claimed in claim 9 wherein the nitric acid produced in the anodic oxidation step is removed by removing part of the stream and replacing the part removed with water or a weaker nitric acid stream.

BAD ORIGINAL

11. A method as claimed in claim 10 wherein the nitric acid stream is the product acid produced by a nitric acid plant.

12. A method as claimed in any one of the preceding claims wherein the aqueous nitrate ion-containing stream is recirculated through the anodic oxidation step, and a stream containing nitrous material is added to it and an oxidised stream substantially purged of nitrous material is removed from it.



BAD ORIGINAL

0041819

1/4

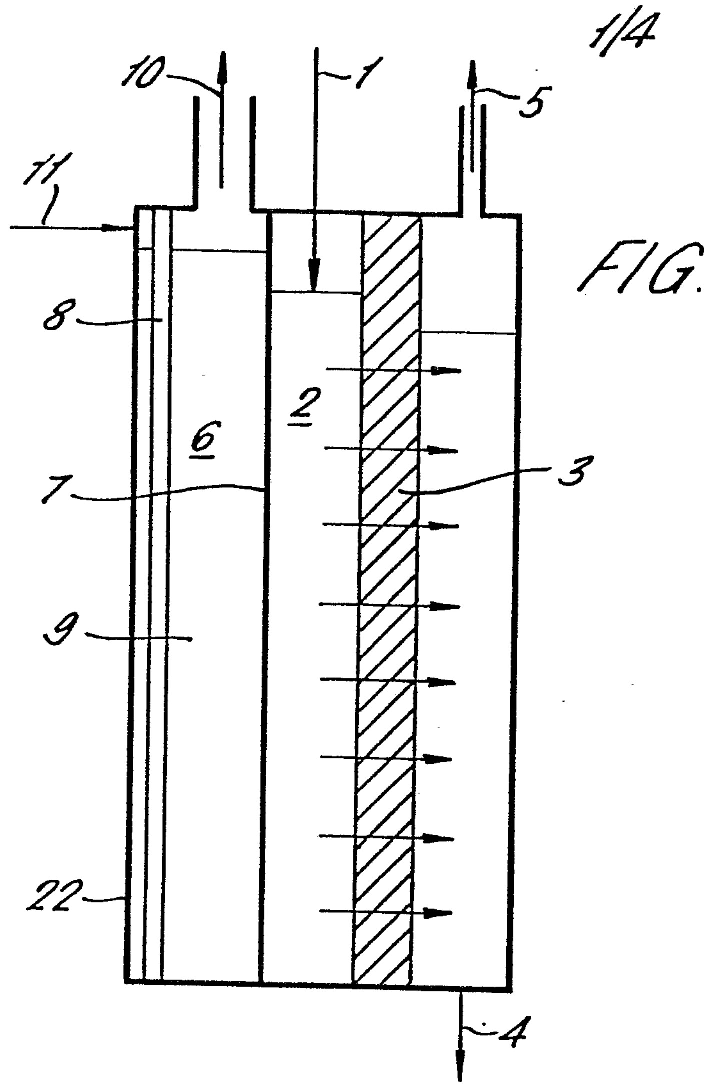


FIG. 1.

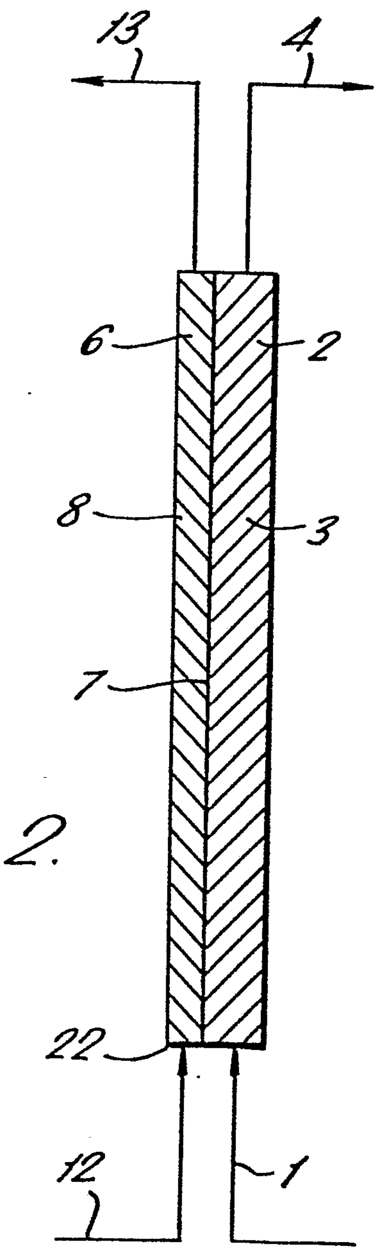


FIG. 2.

FIG. 3.

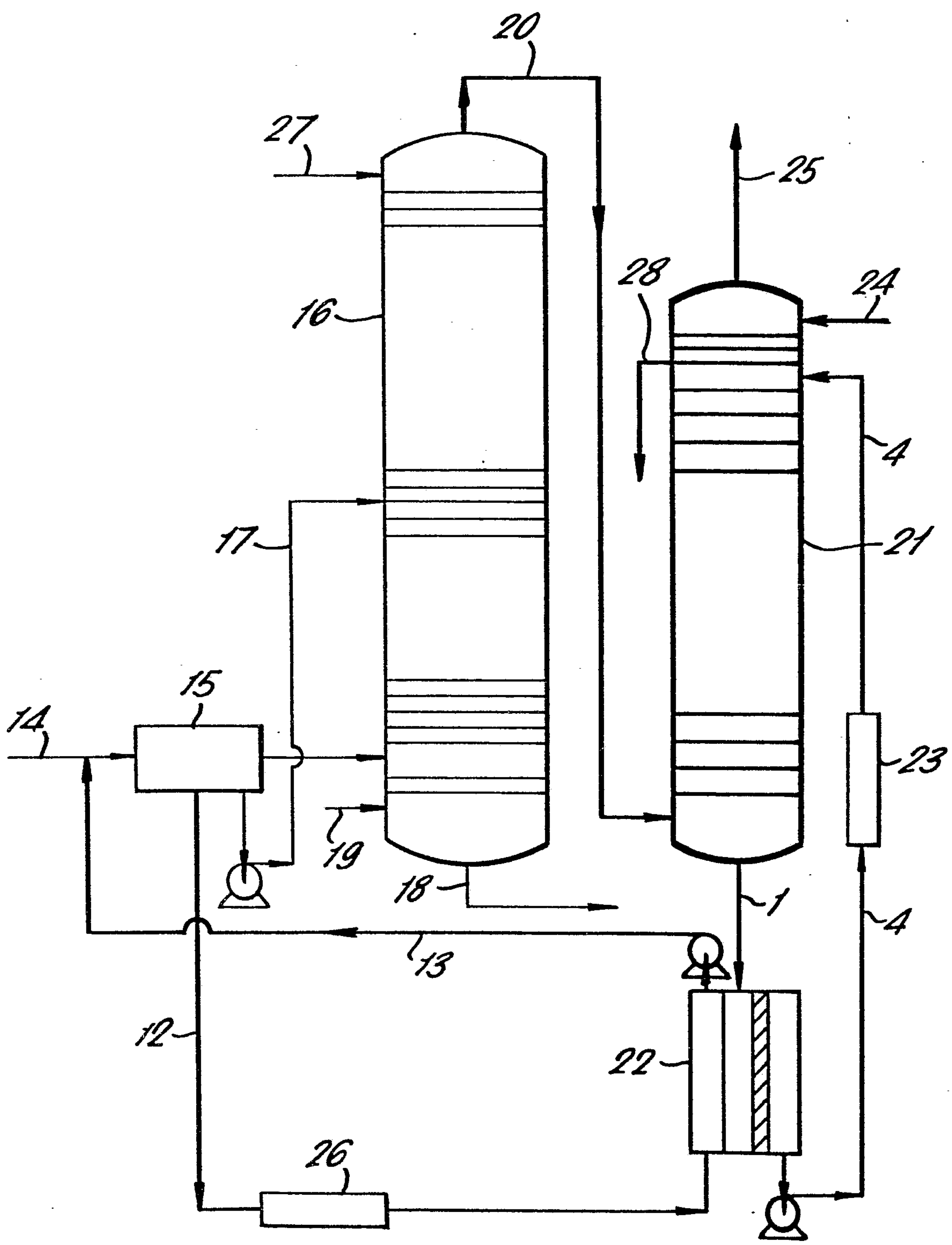

FIG. 4.

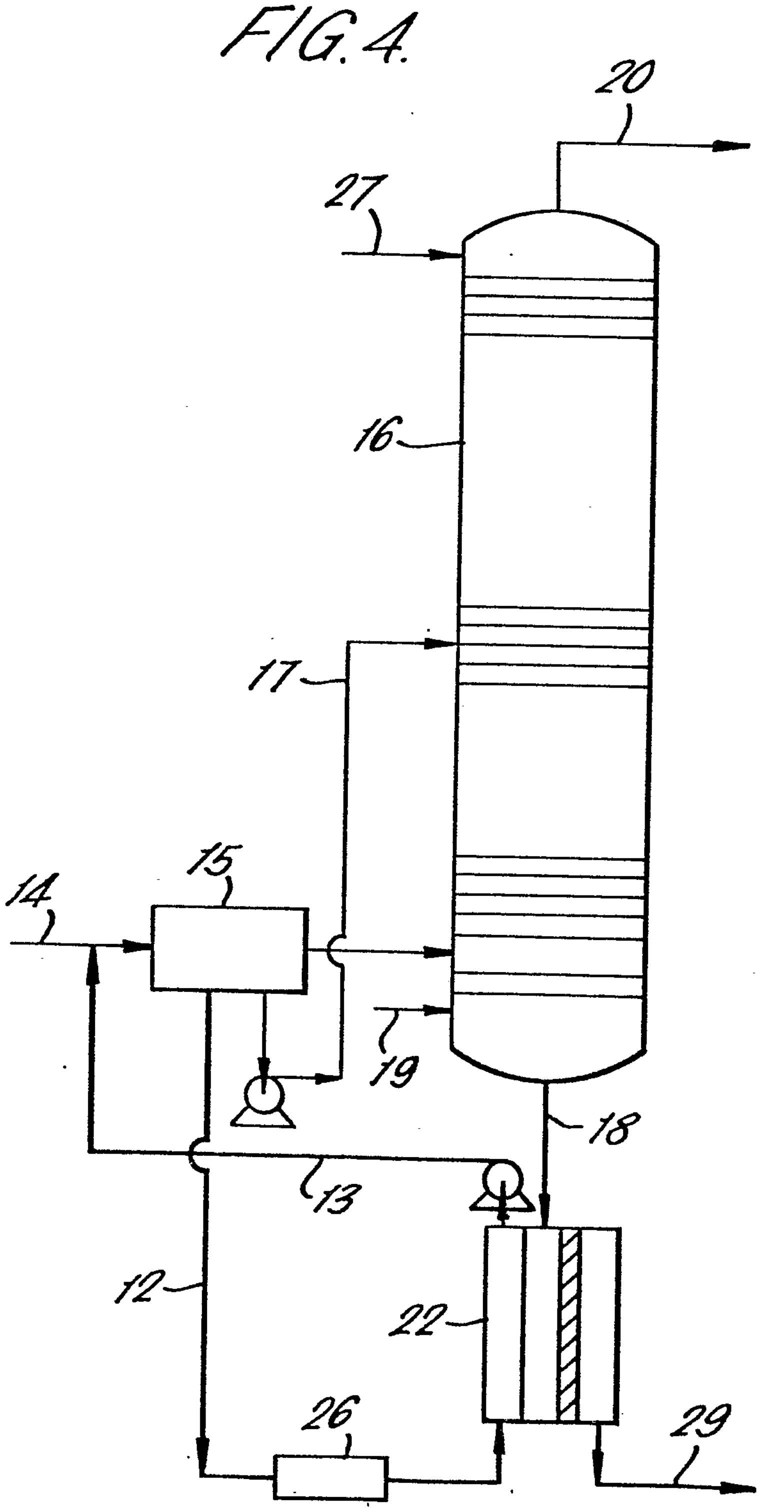

0041819



FIG. 5.